(19) Europäisches Patentamt
European Patent Office
Office européen des brevets

(11) **EP 4 546 461 A1**

(12) # EUROPEAN PATENT APPLICATION
published in accordance with Art. 153(4) EPC

(43) Date of publication:
**30.04.2025 Bulletin 2025/18**

(21) Application number: **23901178.6**

(22) Date of filing: **16.11.2023**

(51) International Patent Classification (IPC):
$H01M\ 4/48^{(2010.01)}$    $C01B\ 33/113^{(2006.01)}$
$H01M\ 4/134^{(2010.01)}$    $H01M\ 10/0525^{(2010.01)}$
$H01M\ 4/02^{(2006.01)}$

(52) Cooperative Patent Classification (CPC):
C01B 33/113; H01M 4/02; H01M 4/134; H01M 4/48;
H01M 10/0525

(86) International application number:
**PCT/KR2023/095081**

(87) International publication number:
**WO 2024/123161 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.12.2022 KR 20220170486
15.11.2023 KR 20230157784**

(71) Applicant: **LG Energy Solution, Ltd.
Seoul 07335 (KR)**

(72) Inventors:
• **KIM, Dohyeun**
  **Daejeon 34122 (KR)**
• **KIM, Donghyuk**
  **Daejeon 34122 (KR)**
• **LEE, Yong Ju**
  **Daejeon 34122 (KR)**
• **JUN, Hyunmin**
  **Daejeon 34122 (KR)**
• **HEO, Jihoi**
  **Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE ACTIVE MATERIAL, METHOD FOR PREPARING NEGATIVE ELECTRODE ACTIVE MATERIAL, NEGATIVE ELECTRODE COMPOSITION, NEGATIVE ELECTRODE FOR LITHIUM SECONDARY BATTERY COMPRISING SAME, AND LITHIUM SECONDARY BATTERY COMPRISING NEGATIVE ELECTRODE**

(57) The present application relates to a negative electrode active material, a method for manufacturing a negative electrode active material, a negative electrode composition, a negative electrode for a lithium secondary battery including the same, and a lithium secondary battery including a negative electrode.

[Figure 1]

EP 4 546 461 A1

**Description**

[Technical Field]

This application claims priority to and the benefit of Korean Patent Application No. 12-2022-0170486 filed in the Korean Intellectual Property Office on December 8, 2023, the entire contents of which are incorporated herein by reference.

The present application relates to a negative electrode active material, a method for manufacturing a negative electrode active material, a negative electrode composition, a negative electrode for a lithium secondary battery including the same, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, according to the demand for high density energy batteries in recent years, research is being actively conducted on a method for increasing a capacity by using together a silicon-based compound such as Si/C and SiOx having a capacity 10 times or higher than that of a graphite-based material, as a negative electrode active material. However, as compared with graphite that is typically used, a silicon-based compound that is a high-capacity material has a large capacity but undergoes rapid volume expansion during charging, thereby disconnecting a conductive path to degrade battery characteristics.

Accordingly, in order to address a problem occurring when the silicon-based compound is used as the negative electrode active material, methods of suppressing the volume expansion itself such as a method of controlling a driving potential, a method of additionally further coating a thin film on an active material layer and a method of controlling a particle diameter of a silicon-based compound, or various measures for preventing a conductive path from being disconnected have been discussed. However, the above methods may rather deteriorate the performance of a battery, and thus, the application thereof is limited, so that there is still a limitation in commercializing the manufacture of a negative electrode battery having a high content of a silicon-based compound.

Therefore, there is a need for conducting research on a silicon-based active material itself capable of reducing breakage of silicon due to intercalation and deintercalation of lithium during charging and discharging, even when the silicon-based active material is used as a negative electrode active material in order to improve capacity performance.

Prior Art Document

(Patent Literature 1) Japanese Patent Application Publication No. 2009-080971

[Detailed Description of the Invention]

[Technical Problem]

It was confirmed that when the distribution of crystal planes within the silicon-based active material and the sphericity are controlled by controlling a flatness (degree of plate-like shape) of the silicon-based active material according to a silicon processing method, at the time of intercalation and deintercalation reactions of lithium, the reactions occurs uniformly and the stress applied to the silicon-based active material is reduced. In particular, it was confirmed through research that the flatness of the silicon-based active material itself can be specifically controlled when the milling temperature, pressure, and time are specifically set in the processing method, and it was confirmed through this that intercalation and deintercalation reactions of lithium ions occur uniformly.

Accordingly, the present application relates to a negative electrode active material, a method for manufacturing a negative electrode active material, a negative electrode composition, a negative electrode for a lithium secondary battery including the same, and a lithium secondary battery including a negative electrode capable of addressing the above-described problems.

[Technical Solution]

An exemplary embodiment of the present specification provides a negative electrode active material including a silicon-based active material satisfying a flatness of Formula 1, wherein the silicon-based active material includes one or more selected from the group consisting of SiOx (x=0) and SiOx (0<x<2) and includes 70 parts by weight or more of SiOx (x=0) on the basis of 100 parts by weight of the silicon-based active material.

$$[Formula\ 1]$$

$$45 \leq (A/B) \times 100$$

In the Formula 1, A refers to a length of a short axis of the silicon-based active material, and B refers to a length of a long axis of the silicon-based active material.

Another exemplary embodiment provides a method for manufacturing a negative electrode active material, the method including: preparing metal silicon; and pulverizing the metal silicon to form a silicon-based active material, wherein the silicon-based active material satisfies a flatness of Formula 1 above.

Still another exemplary embodiment provides a negative electrode composition including: the negative electrode active material according to the present application; a negative electrode conductive material; and a negative electrode binder.

Yet another exemplary embodiment provides a negative electrode for a lithium secondary battery including: a negative electrode current collector layer; and a negative electrode active material layer provided on one surface or both surfaces of the negative electrode current collector layer, wherein the negative electrode active material layer includes the negative electrode composition according to the present application or a cured product thereof.

Finally, there is provided a lithium secondary battery including a positive electrode; the negative electrode for a lithium secondary battery according to the present application; a separator provided between the positive electrode and the negative electrode; and an electrolyte.

[Advantageous Effects]

The negative electrode active material of the present invention includes one or more selected from the group consisting of SiOx (x=0) and SiOx (0<x<2) as the silicon-based active material, and includes 70 parts by weight or more of the SiOx (x=0) on the basis of 100 parts by weight of the silicon-based active material, i.e., has a pure Si active material, and includes the silicon-based active material generated by controlling pulverization conditions with improved processing method of the related art and satisfying certain physical properties. When the silicon-based active material manufactured as such is used, at the time of the intercalation and deintercalation reactions of lithium during the charging and discharging, the reactions can occur uniformly and stress applied to the silicon-based active material can be reduced, so that breakage of particles can be reduced, and thus, the life maintenance rate of the electrode can be improved.

In particular, the present application is characterized by controlling the flatness satisfying the range of Formula 1 above when manufacturing a silicon-based active material as described above. That is, when the flatness satisfies the range of Formula 1 above, the silicon-based active material includes a larger ratio of (220) crystal planes than the related art, so lithium enters and exits uniformly during the intercalation and deintercalation reactions of lithium, resulting in a reduction in breakage of silicon on the electrode surface to enhance the life characteristics of the electrode.

[Brief Description of Drawings]

FIG. 1 is a view showing a stack structure of a negative electrode for a lithium secondary battery according to an exemplary embodiment of the present application.
FIG. 2 is a view showing a stack structure of a lithium secondary battery according to an exemplary embodiment of the present application.
FIG. 3 is a view showing a method of calculating a crystal grain size.

FIG. 4 is a view showing a unit structure of a silicon-based active material according to an exemplary embodiment of the present application.

FIG. 5 is a view showing a (220) plane and a (111) plane of the silicon-based active material according to the exemplary embodiment of the present application.

FIG. 6 is a view comparing the densities of the (220) plane and the (111) plane of the silicon-based active material.

<Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle size distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present application, the particle size or particle diameter may mean an average diameter or representative diameter of each crystal grain constituting the metal powder.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode active material including a silicon-based active material satisfying a flatness of Formula 1, wherein the silicon-based active material includes one or more selected from the group consisting of SiOx (x=0) and SiOx (0<x<2) and includes 70 parts by weight or more of SiOx (x=0) on the basis of 100 parts by weight of the silicon-based active material.

[Formula 1]

$$45 \leq (A/B) \times 100$$

In the Formula 1 above, A refers to a length of a short axis of the silicon-based active material, and B refers to a length of a long axis of the silicon-based active material.

The present application is characterized by controlling the flatness satisfying the range of Formula 1 above when manufacturing a silicon-based active material. That is, when the flatness satisfies the range of Formula 1 above, the silicon-based active material includes a larger proportion of (220) crystal planes than the related art, so lithium enters and exits uniformly during the intercalation and deintercalation reactions of lithium, resulting in a reduction in breakage of silicon on the electrode surface to enhance the life characteristics of the electrode.

In an exemplary embodiment of the present application, A refers to a length of a short axis of the silicon-based active material, and B refers to a length of a long axis of the silicon-based active material. When measuring the long axis and the short axis, a ratio of the long axis and short axis of the silicon-based active material can be measured by taking a SEM image of a cross-section of an electrode including the silicon-based negative electrode active material and then analyzing the cross-sectional image of each particle through an image processing program.

In this case, the length of the long axis of the silicon-based active material may refer to a length of the longest axis of the silicon-based active material particles of individual particles confirmed through the above-described SEM image capturing and image processing program, and the length of the minor axis may refer to a length of the shortest axis.

In an exemplary embodiment of the present application, the Formula 1 above may satisfy a range of $45 \leq (A/B) \times 100$, preferably $46 \leq (A/B) \times 100$, and more preferably $47 \leq (A/B) \times 100$, and a range of $(A/B) \times 100 \leq 100$, preferably $(A/B) \times 100 \leq 90$, and more preferably $(A/B) \times 100 \leq 88$.

In the present application, the silicon-based active material satisfies the range of the flatness (Formula 1), and through the control of the particle shape as described above, the plane with high lithium mobility in the active material can be relatively more distributed within the particles, allowing lithium to be easily intercalated and deintercalated into and from the active material. That is, the uniformity between active materials in the electrode is improved during the intercalation and deintercalation of lithium, making it possible to reduce breakage of particles at the top of the electrode to improve the life performance of a battery including a silicon-based active material.

In the present application, the silicon-based active material satisfying the flatness of the Formula 1 above can be adjusted by a manufacturing method described below, the details of which will be described below.

An exemplary embodiment of the present specification provides the negative electrode active material in which the silicon-based active material includes (220) crystal planes and (111) crystal planes, and the silicon-based active material satisfies the following Formula 2.

[Formula 2]

$$37 \leq (X/Y) \times 100$$

In the Formula 2 above, Y refers to a ratio of the (111) crystal planes in the silicon-based active material, and X refers to a ratio of the (220) crystal planes in the silicon-based active material.

The present application is characterized by controlling a crystal grain direction distribution satisfying the flatness of the Formula 1 above and the range of the Formula 2 above when manufacturing a silicon-based active material. That is, when a relatively large ratio of (111) crystal planes is formed as in the related art, lithium does not enter and exit uniformly during the intercalation and deintercalation reactions of lithium because the (111) crystal plane has lower lithium mobility compared to the (220) crystal plane. However, the silicon-based active material according to the present application includes a larger ratio of (220) crystal planes than the related art, so lithium enters and exits uniformly during the intercalation and deintercalation reactions of lithium, resulting in a reduction in breakage of silicon on the electrode surface to enhance the life characteristics of the electrode.

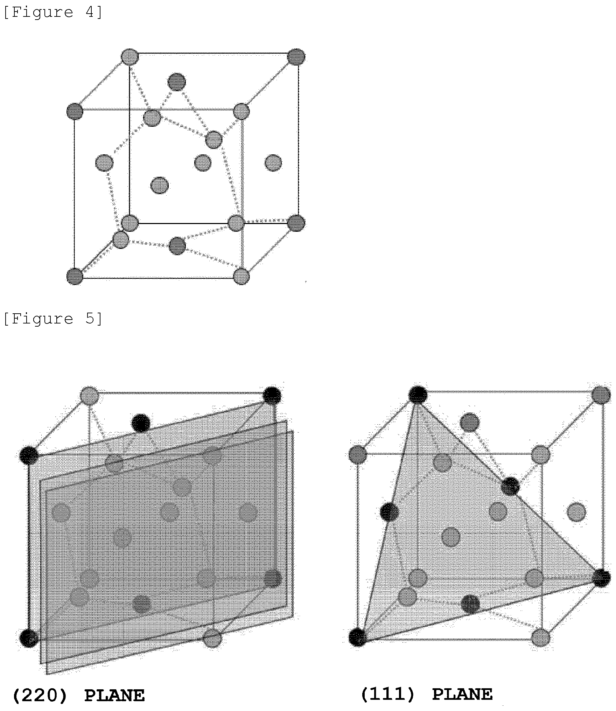

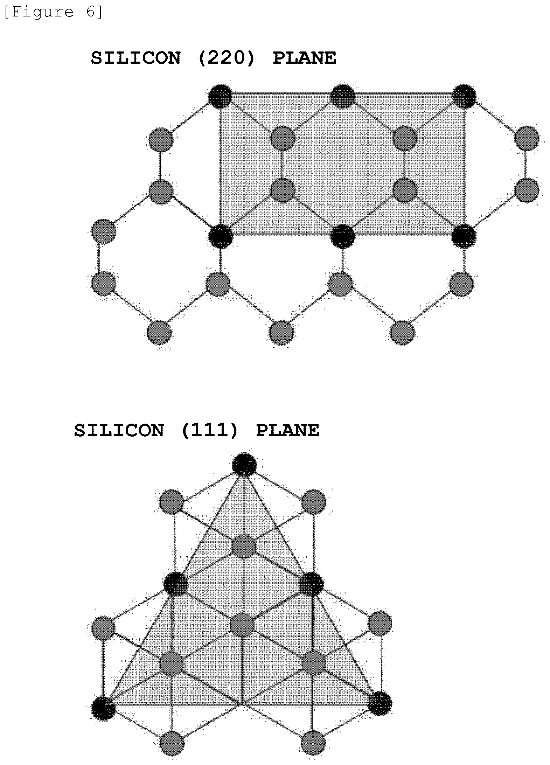

FIG. 4 is a view showing a unit structure of a silicon-based active material according to an exemplary embodiment of the present application. The unit structure includes crystal planes, and specifically, a (220) plane and a (111) plane of the silicon-based active material can be seen in FIG. 5. FIG. 6 is a view comparing densities of the (220) plane and the (111) plane of the silicon-based active material. As can be seen specifically, when checking the densities and directions of the (220) plane and the (111) plane, the particle density in the same area is lower in the (220) plane. Therefore, it could be confirmed that when Li migrates, the (220) plane with a smaller particle density is more advantageous.

In an exemplary embodiment of the present application, X refers to a ratio of the (220) crystal planes in the silicon-based active material, which is a ratio on the basis of a total of planes in the silicon-based active material, and may satisfy 30 to 60, preferably 35 to 60, and more preferably 35 to 55.

In an exemplary embodiment of the present application, Y refers to a ratio of the (111) crystal planes in the silicon-based active material, which is a ratio on the basis of a total of planes in the silicon-based active material, and may satisfy 50 to 80, preferably 55 to 80, and more preferably 55 to 75.

In an exemplary embodiment of the present application, the silicon-based active material may further include various crystal planes.

In an exemplary embodiment of the present application, the silicon-based active material may include one or more selected from the group consisting of SiOx (x=0) and SiOx (0<x<2), and may include the SiOx (x=0) in an amount of 70 parts by weight or more on the basis of 100 parts by weight of the silicon-based active material.

In an exemplary embodiment of the present application, the silicon-based active material may include SiOx (x=0), and include 70 parts by weight or more of SiOx (x=0) on the basis of 100 parts by weight of the silicon-based active material.

In another exemplary embodiment, SiOx (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less on the basis of 100 parts by weight of the silicon-based active material.

In an exemplary embodiment of the present application, for the silicon-based active material, particularly, pure silicon (Si) particles may be used as a silicon-based active material. The use of pure silicon (Si) particles as the silicon-based active material may mean that, on the basis of 100 parts by weight of the total silicon-based active material as described above, pure Si particles (SiOx (x=0)) not bonded to other particles or elements are included within the above range.

In an exemplary embodiment of the present application, the silicon-based active material may be formed of silicon-based particles having 100 parts by weight of SiOx (x=0) on the basis of 100 parts by weight of the silicon-based active material.

In an exemplary embodiment of the present application, the silicon-based active material may include a metal impurity, and in this case, the impurity is metal that may be generally included in the silicon-based active material, and specifically, a content thereof may be 0.1 part by weight or less on the basis of 100 parts by weight of the silicon-based active material.

The capacity of the silicon-based active material is significantly higher than that of a graphite-based active material that is typically used, so that there have been more attempts to apply the same. However, the volume expansion rate of the silicon-based active material during charging/discharging is high, so that, for example, only a small amount thereof is mixed and used with a graphite-based active material.

Therefore, in the present invention, only the silicon-based active material is used as a negative electrode active material in order to improve capacity performance, and at the same time, in order to address the problems as described above, rather than controlling the compositions of the conductive material and the binder, a crystal grain size or a surface area of the silicon-based active material itself is controlled to solve the existing problems.

In an exemplary embodiment of the present application, the crystal grain size of the silicon-based active material may be 500 nm or less.

In another exemplary embodiment, the crystal grain size of the silicon-based active material may be 500 nm or less, preferably 400 nm or less, more preferably 200 nm or less, still more preferably 100 nm or less, specifically 95 nm or less, and more specifically 91 nm or less. The crystal grain size of the silicon-based active material may have a range of 10 nm or greater, preferably 15 nm or greater.

The silicon-based active material has the crystal grain size described above, and the crystal grain size of the silicon-based active material may be controlled by changing a process condition in a manufacturing process. In this case, when the above range is satisfied, the crystal grain boundaries are widely distributed, and thus, the lithium ions can be uniformly intercalated during intercalating of lithium ions, thereby reducing the stress applied during intercalating of lithium ions into the silicon particles, and accordingly, mitigating breakage of the particles. As a result, characteristics capable of improving the life stability of the negative electrode are obtained. If the crystal grain size exceeds the above range, the crystal grain boundaries within the particles are narrowly distributed, and in this case, lithium ions are non-uniformly intercalated into the particles, leading to an increase in stress during the intercalating of ions, and accordingly, breakage of particles.

In an exemplary embodiment of the present application, there is provided the negative electrode active material in which the silicon-based active material includes a crystal structure having a crystal grain distribution of 1 nm or greater and 200 nm or less, and an area ratio of the crystal structure based on a total area of the silicon-based active material is 5% or less.

In another exemplary embodiment, the area ratio of the crystal structure based on the total area of the silicon-based active material may be 5% or less, or 3% or less, and 0.1% or greater.

That is, the silicon-based active material according to the present application has a crystal grain size of 200 nm or less, is formed so that the size of one crystal structure is small, and may satisfy the above area ratio. Accordingly, the distribution of the crystal grain boundaries may be widened, and accordingly, the above-described effects may be exhibited.

In an exemplary embodiment of the present application, there is provided the negative electrode active material in which the number of the crystal structures included in the silicon-based active material is 20 or more.

In another exemplary embodiment, the number of crystal structures included in the silicon-based active material may satisfy a range of 20 or more, 30 or more, or 35 or more, and 60 or less or 50 or less.

That is, as described above, when the crystal grain size of the silicon-based active material satisfies the above range and the number of crystal structures satisfies the above range, the silicon-based active material itself has strength within an appropriate range. Therefore, when such a silicon-based active material is included in an electrode, flexibility can be imparted, and volume expansion can be effectively suppressed.

In the present application, the crystal grain refers to a crystal particle in a metal or material, which is a collection of microscopically irregular shapes, and the crystal grain size may mean a diameter of the observed crystal grain particle. That is, in the present application, the crystal grain size means a size of a domain sharing the same crystal direction in a particle, and has a different concept from a particle size or a size of a particle diameter expressing a size of a material.

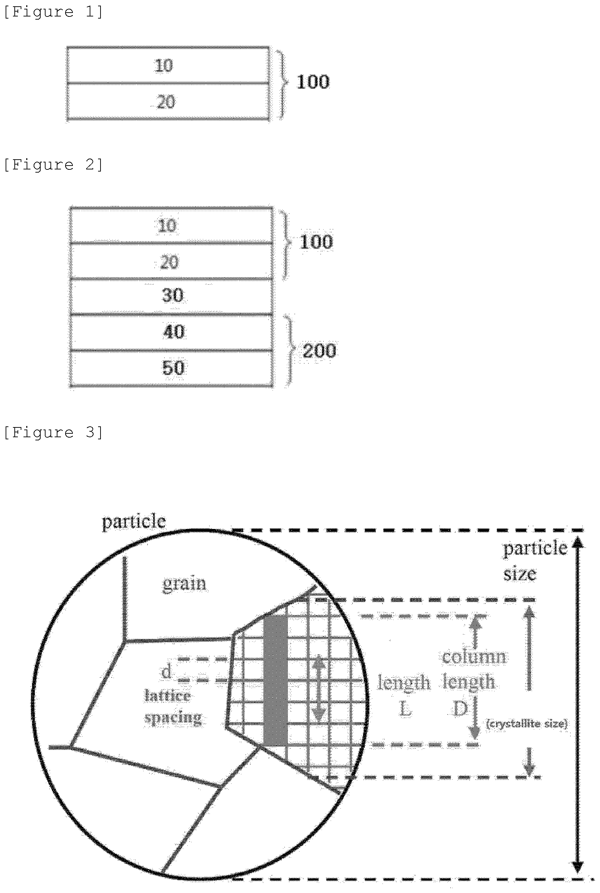

In an exemplary embodiment of the present application, the crystal grain size can be calculated as a value of full width at half maximum (FWHM) through XRD analysis. Specifically, it can be seen in FIG. 3 how to calculate the crystal grain size. In FIG. 3, the remaining values except L are measured through XRD analysis of the silicon-based active material, and the crystal grain size can be measured through the Debey-Scherrer Formula showing that the FWHM and the crystal grain size are in inverse ratio. The Debey-Scherrer Formula is as shown in the following Formula 1-1.

$$[\text{Formula } 1\text{-}1]$$

$$\text{FWHM=K}\lambda/\text{LCos}\theta$$

In the Formula 1-1 above, L is a crystal grain size, K is a constant, $\theta$ is a Bragg angle, and $\lambda$ means a wavelength of X-ray.

In addition, the shapes of the crystal grains are diverse and can be measured in three dimensions. In general, the size of the crystal grain can be measured by a generally used circle method or diameter measurement method, but the present invention is not limited thereto.

In the diameter measurement method, the size of the crystal grain can be measured by drawing 5 to 10 parallel lines each having a length of L mm on a micrograph of a target particle, counting the number of crystal grains z on each line, and averaging them. In this case, only crystal grains that are wholly included on the line are counted, and crystal grains that are partially put (laid across) on the line are excluded. When the number of lines is P and the magnification is V, the average particle diameter can be calculated by the following Formula 1-2.

$$[\text{Formula } 1\text{-}2]$$

$$\text{Dm} = (\text{L*P*10}^3)/(\text{zV}) \quad (\text{um})$$

In addition, the circle method is a method in which a circle with a predetermined diameter is drawn on a micrograph of a target particle, and then an average area of crystal grains is calculated by the number of crystal grains in the circle and the number of crystal grains laid across the boundary line, and the average area can be calculated by the following Formula 1-3.

$$[\text{Formula } 1\text{-}3]$$

$$\text{Fm} = (\text{Fk} * 10^6)/((0.67\text{n} + \text{z}) \text{ V}^2) \quad (\text{um}^2)$$

In the Formula 1-3 above, Fm is an average particle area, Fk is a measurement area on the photograph, z is the number of particles in a circle, n is the number of particles laid across the circle, and V is a magnification of a microscope.

In an exemplary embodiment of the present application, the negative electrode active material may include a silicon-based active material whose surface area is 0.25 $m^2/g$ or greater.

In another exemplary embodiment, the silicon-based active material may have a surface area of 0.25 $m^2/g$ or greater, preferably 0.28 $m^2/g$ or greater, and more preferably 0.30 $m^2/g$ or greater, specifically 0.31 $m^2/g$ or greater, and more specifically 0.32 $m^2/g$ or greater. The silicon-based active material may satisfy a range of a surface area of 3 $m^2/g$ or

less, preferably 2.5 m$^2$/g or less, and more preferably 2.2 m$^2$/g or less. The surface area may be measured according to DIN 66131 (using nitrogen).

The silicon-based active material has the surface area described above, and the surface area of the silicon-based active material may be controlled by changing a process condition of a manufacturing process and a growth condition of the silicon-based active material described below. That is, when the negative electrode active material is manufactured using the manufacturing method according to the present application, the rough surface results in a larger surface area, as compared with particles with the same particle size. In this case, the above range is satisfied, and thus, the bonding force with the binder increases, leading to reduction in cracks of an electrode due to repeating charge and discharge cycles.

In addition, the lithium ions can be uniformly intercalated during intercalation of lithium ions, resulting in reduction in stress applied during intercalation of lithium ions into the silicon particles, and accordingly, reduction in breakage of the particles. As a result, characteristics capable of improving the life stability of the negative electrode are obtained. If the surface area is less than the above range, the surface is formed smooth even with the same particle size, resulting in a decrease in the bonding force with the binder, and cracks of the electrode. In this case, lithium ions are non-uniformly intercalated into the particles, resulting in an increase in the stress due to the ion intercalation, and breakage of particles.

In an exemplary embodiment of the present application, there is provided the negative electrode active material in which the silicon-based active material satisfies a range of the following Equation 2-1.

$$[\text{Formula } 2\text{-}1]$$

$$X1/Y1 \leq 0.960$$

In the Formula 2-1 above, X1 refers to an actual area of the silicon-based active material, and Y1 refers to an area of a spherical particle with the same circumference as the silicon-based active material.

The measurement for the Formula 2-1 above may be performed using a particle shape analyzer. Specifically, the silicon-based active material according to the present application may be scattered on a glass plate through air injection, and then a shape of 10,000 silicon-based active material particles in a photograph obtained by capturing a shadow image of the scattered silicon-based active material particles may be measured. In this case, the Formula 2-1 above is a value expressing an average of 10,000 particles. The Formula 2-1 according to the present application can be measured from the above image, and the Formula 2-1 above can be expressed as sphericity (circularity) of the silicon-based active material. The sphericity may also be expressed by Formula [4n*actual area of silicon-based active material/(circumference)$^2$].

In an exemplary embodiment of the present application, the sphericity of the silicon-based active material may be, for example, 0.960 or less, for example, 0.957 or less. The sphericity of the silicon-based active material may be 0.8 or higher, for example, 0.9 or higher, specifically 0.93 or higher, more specifically 0.94 or higher, for example, 0.941 or higher.

In an exemplary embodiment of the present application, there is provided the negative electrode active material in which the silicon-based active material satisfies a range of the following Equation 2-2.

$$[\text{Formula } 2\text{-}2]$$

$$X2/Y2 \leq 0.995$$

In the Formula 2-2 above, Y2 is an actual circumference of the silicon-based active material, and X2 is a circumference of a circumscribed figure of the silicon-based active material.

The measurement for the Formula 2-2 above may be performed using a particle shape analyzer. Specifically, the silicon-based active material according to the present application may be scattered on a glass plate through air injection, and then a shape of 10,000 silicon-based active material particles in a photograph obtained by capturing a shadow image of the scattered silicon-based active material particles may be measured. In this case, the Formula 2-2 above is a value expressing an average of 10,000 particles. The Formula 2-2 according to the present application can be measured from the above image, and the Formula 2-2 above can be expressed as convexity of the silicon-based active material.

In an exemplary embodiment of the present application, a range of $X2/Y2 \leq 0.996$, preferably $X2/Y2 \leq 0.995$ may be satisfied, and a range of $0.8 \leq X2/Y2$, preferably $0.9 \leq X2/Y2$, more preferably $0.95 \leq X2/Y2$, specifically $0.98 \leq X2/Y2$ may be satisfied.

The smaller the value of the Formula 2-1 or Formula 2-2 above, the greater the roughness of the silicon-based active material may be meant. As the silicon-based active material with the above-described range is used, the bonding force with the binder increases, leading to a reduction in crack of the electrode due to the repeating of the charge/discharge cycle.

In an exemplary embodiment of the present application, the silicon-based active material may include silicon-based particles having a particle size distribution of 0.01 $\mu$m or greater and 30 $\mu$m or less.

The description 'the silicon-based active material includes silicon-based particles having a particle size distribution of 0.01 $\mu$m or greater and 30 $\mu$m or less' means including a plurality of individual silicon-based particles having a particle size within the above range, and the number of silicon-based particles included is not limited.

When the silicon-based particle is spherical, the particle size thereof can be expressed as its diameter. However, even when the silicon-based particle has a shape other than spherical, the particle size can be measured in contrast to the case of the spherical shape, and the particle size of the individual silicon-based particle can be measured by a method that is generally known in the art.

Note that the average particle diameter (D50 size) of the silicon-based active material of the present invention may be 3 $\mu$m to 10 $\mu$m, specifically 5.5 $\mu$m to 8 $\mu$m, and more specifically 6 $\mu$m to 7 $\mu$m. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density nonuniformity phenomenon during charging and discharging can be prevented.

In an exemplary embodiment of the present application, the silicon-based active material generally has a characteristic BET surface area. The BET surface area of the silicon-based active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET surface area is measured in accordance with DIN 66131 (using nitrogen).

In an exemplary embodiment of the present application, there is provided the negative electrode active material in which the silicon-based active material satisfying the flatness of the Formula 1 above is included in an amount of 80 parts by weight or more and 100 parts by weight or less on the basis of 100 parts by weight of the negative electrode active material.

In another exemplary embodiment, the silicon-based active material satisfying the flatness of the Formula 1 above may be included in an amount of 80 parts by weight or more and 100 parts by weight or less, preferably 85 parts by weight or more and 99 parts by weight or less, and more preferably 90 parts by weight or more and 99 parts by weight or less on the basis of 100 parts by weight of the negative electrode active material.

That is, the negative electrode active material according to the present application includes the silicon-based active material satisfying the range of the Formula 1 above within the above-described range, and at the same time may further include a silicon-based active material or a carbon-based active material that can be generally included.

In an exemplary embodiment of the present application, there is provided a negative electrode composition including the negative electrode active material described above, a negative electrode conductive material, and a negative electrode binder.

In an exemplary embodiment of the present application, there is provided the negative electrode composition in which the negative electrode active material is included in an amount of 60 parts by weight or more on the basis of 100 parts by weight of the negative electrode composition.

In an exemplary embodiment of the present application, there is provided the negative electrode composition in which the silicon-based active material is included in an amount of 60 parts by weight or more on the basis of 100 parts by weight of the negative electrode composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 85 parts by weight or less on the basis of 100 parts by weight of the negative electrode composition.

The negative electrode composition according to the present application uses the negative electrode active material satisfying the specific crystal grain size capable of controlling the volume expansion rate during charging and discharging even when the silicon-based active material having a significantly high capacity is used within the above range. Accordingly, even when the silicon-based active material is within the above range, the negative electrode composition does not degrade the performance of the negative electrode and has excellent output characteristics in charging and discharging.

In the related art, it is general to use only graphite-based compounds as the negative electrode active material. However, in recent years, as the demand for high-capacity batteries is increasing, attempts to mix and use silicon-based active materials are increasing in order to increase capacity. However, in the case of a silicon-based active material, even when the characteristics of the silicon-based active material itself are adjusted as described above, the volume may rapidly expand during the charging/discharging, thereby causing some problems of damaging the conductive path formed in the negative electrode active material layer.

Therefore, in an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a point-like or spherical conductive material that may be used for improving conductivity of the negative electrode, and has conductivity without causing a chemical change. Specifically, the point-like conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2/g$ or greater and 70 $m^2/g$ or less, preferably 45 $m^2/g$ or greater and 65 $m^2/g$ or less, and more preferably 50 $m^2/g$ or greater and 60 $m^2/g$ or less.

In an exemplary embodiment of the present application, a content of the functional group (volatile matter) of the point-like conductive material may satisfy a range of 0.01% or more and 1% or less, preferably 0.01% or more and 0.3% or less, and more preferably 0.01% or more and 0.1% or less. In particular, when the content of the functional group of the point-like conductive material satisfies the above range, a functional group is present on a surface of the point-like conductive material, so that the point-like conductive material can be smoothly dispersed in a solvent when water is used as the solvent. In particular, in the present invention, as the specific silicon-based active material is used, a functional group content of the point-like conductive material can be lowered, which exhibits an excellent effect in improving dispersibility.

In an exemplary embodiment of the present application, the point-like conductive material having the content of the functional group within the range described above is included together with the silicon-based active material, and the content of the functional group can be adjusted according to a degree of heat treatment of the point-like conductive material.

In an exemplary embodiment of the present application, the particle diameter of the point-like conductive material may be 10 nm to 100 nm, preferably 20 nm to 90 nm, and more preferably 20 nm to 60 nm.

In an exemplary embodiment of the present application, the conductive material may include a planar conductive material.

The planar conductive material improves conductivity by increasing surface contact between silicon particles in the negative electrode, and at the same time, can serve to suppress disconnection of the conductive path due to the volume expansion. The planar conductive material may be expressed as a plate-like conductive material or a bulk-type conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, the average particle diameter (D50) of the planar conductive material may be 2 $\mu$m to 7 $\mu$m, specifically 3 $\mu$m to 6 $\mu$m, and more specifically 3.5 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 $\mu$m or greater and 2.0 $\mu$m or less, D50 of 2.5 $\mu$m or greater and 3.5 $\mu$m or less and D90 of 6.5 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 1 $m^2/g$ or greater.

In another exemplary embodiment, the planar conductive material may have a BET specific surface area of 1 $m^2/g$ or greater and 500 $m^2/g$ or less, preferably 5 $m^2/g$ or greater and 300 $m^2/g$ or less, and more preferably 5 $m^2/g$ or greater and 250 $m^2/g$ or less.

For the planar conductive material of the present application, a planar conductive material with a high specific surface area or a planar conductive material with a low specific surface area may be used.

In another exemplary embodiment, the planar conductive material is a planar conductive material with a high specific surface area, and the BET specific surface area may satisfy a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may satisfy a range of 1 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, there is provided the negative electrode composition in which the negative electrode conductive material is included in an amount of 10 parts by weight or more and 40 parts by weight or less on the basis of 100 parts by weight of the negative electrode composition.

In another exemplary embodiment, the negative electrode conductive material may be included in an amount of 0.1 part by weight or more and 40 parts by weight or less, preferably 0.2 part by weight or more and 30 parts by weight or less, more preferably 0.4 part by weight or more and 25 parts by weight or less, and most preferably 0.4 part by weight or more and 10 parts by weight or less on the basis of 100 parts by weight of the negative electrode composition.

In an exemplary embodiment of the present application, there is provided the negative electrode composition in which the negative electrode conductive material includes a planar conductive material and a linear conductive material.

In an exemplary embodiment of the present application, there is provided the negative electrode composition in which the negative electrode conductive material includes 80 parts by weight or more and 99.9 parts by weight or less of the planar conductive material and 0.1 part by weight or more and 20 parts by weight or less of the linear conductive material on the basis of 100 parts by weight of the negative electrode conductive material.

In another exemplary embodiment, the negative electrode conductive material may include 80 parts by weight or more and 99.9 parts by weight or less, preferably 85 parts by weight or more and 99.9 parts by weight or less, and more preferably 95 parts by weight or more and 98 parts by weight or less of the planar conductive material on the basis of 100 parts by weight of the negative electrode conductive material.

In another exemplary embodiment, the negative electrode conductive material may include 0.1 part by weight or more and 20 parts by weight or less, preferably 0.1 part by weight or more and 15 parts by weight or less, and more preferably 0.2 part by weight or more and 5 parts by weight or less of the linear conductive material on the basis of 100 parts by weight of the negative electrode conductive material.

In an exemplary embodiment of the present application, the negative electrode conductive material includes the planar conductive material and the linear conductive material and satisfies the composition and ratio described above, respectively, so the life characteristics of an existing lithium secondary battery are not significantly affected, and particularly, the number of points where charging and discharging are possible increases when the planar conductive material and the linear conductive material are included, so that output characteristics are excellent at a high C-rate and an amount of gas generation at high temperatures is reduced.

In an exemplary embodiment of the present application, the negative electrode conductive material may be composed of a linear conductive material.

In particular, when a linear conductive material is used alone, the electrode tortuosity, which is a problem of silicon-based negative electrodes, can be simplified, making it possible to improve the electrode structure, and accordingly, to reduce the migration resistance of lithium ions in the electrode.

In an exemplary embodiment of the present application, when the negative electrode conductive material includes a linear conductive material alone, the linear conductive material may be included in an amount of 0.1 part by weight or more and 5 parts by weight or less, preferably 0.2 part by weight or more and 3 parts by weight or less, and more preferably 0.4 part by weight or more and 1 part by weight or less on the basis of 100 parts by weight of the negative electrode composition.

The negative electrode conductive material according to the present application has a completely different configuration from that of a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, has a point-like shape, and a BET specific surface area thereof may satisfy a range of 0.1 $m^2/g$ or greater and 4.5 $m^2/g$ or less. In addition, plate-like graphite, which is a planar conductive material, has a planar shape, and a BET specific surface area thereof may be 5 $m^2/g$ or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure during volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, and more preferably 20 parts by weight or less, and 5 parts by weight or more, and 10 parts by weight or more on the basis of 100 parts by weight of the negative electrode composition.

An exemplary embodiment of the present application provides a method for manufacturing a negative electrode active material, the method including: preparing metal silicon; and pulverizing the metal silicon to form a silicon-based active material, wherein the silicon-based active material satisfies the flatness of the Formula 1 above.

In the present application, there is provided the method for manufacturing a negative electrode active material in which the step of preparing the metal silicon includes a pulverization-type metal silicon forming step; or, a silane deposition-type metal silicon forming step.

That is, the metal silicon may be formed by physically pulverizing a general lump of silicon (unprocessed silicon) or chemical silane deposition, but the present invention is not limited thereto.

In an exemplary embodiment of the present application, there is provided the method for manufacturing a negative electrode active material in which the pulverization-type metal silicon forming step includes pulverizing unprocessed silicon (lump of silicon) to form the metal silicon.

The pulverization-type metal silicon forming step may correspond to a process of pulverizing unprocessed silicon (lump of silicon) by physical force.

In an exemplary embodiment of the present application, there is provided the method for manufacturing a negative electrode active material in which the silane deposition-type metal silicon forming step includes depositing a metal silicon-based active material on a substrate by chemically reacting a silane gas; and obtaining the metal silicon-based active material deposited on the substrate.

The silane deposition-type metal silicon forming step corresponds to a chemical method. That is, metal silicon can be formed by depositing a metal silicon-based active material on a substrate or wafer through a chemical reaction of a silane gas, and then scraping the deposited metal silicon-based active material to obtain the metal silicon-based active material.

In this case, when forming metal silicon through the silane deposition (chemical method), the metal silicon is formed in bulk and is larger in size than when forming metal silicon through an existing pulverization method, and accordingly, the metal silicon can be manufactured to satisfy the flatness of the Formula 1 above through a pulverization (milling) process described below.

According to an example, the silane gas may include one or more gas selected from monosilane, dichlorosilane, and trichlorosilane, and specifically, may be a trichlorosilane gas.

In an exemplary embodiment of the present application, the step of depositing a metal silicon-based active material on a substrate by chemically reacting a silane gas may be performed under a pressure condition of 10 Pa to 150 Pa. Due to such a low pressure, a silicon growth rate is reduced, and as a result, formation of small crystal grains can be achieved. The depositing may be performed under a temperature condition of 100°C or higher, specifically 500°C or higher, preferably 800°C or higher, more preferably 800°C to 1300°C, or 800°C to 2200°C. This is a lower temperature than the existing gas atomizing method of heating Si to 1600°C or higher in order to melt Si.

In an exemplary embodiment of the present application, the method may further include a step of growing the metal silicon-based active material through crystal nucleation, and the step of growing the metal silicon-based active material through crystal nucleation may be performed under a temperature condition of 800°C or higher, and preferably 800°C to 1300°C. This is a lower temperature than the existing gas atomizing method of heating Si to 1600°C or higher in order to melt Si. In addition, the step of growing the metal silicon-based active material through crystal nucleation may be performed under a pressure of 100 Pa to 150 Pa. Due to such a low pressure, a silicon growth rate is reduced, and as a result, formation of small crystal grains and specific surface areas can be achieved.

In an exemplary embodiment of the present application, there is provided the method for manufacturing a negative electrode active material further including depositing a metal silicon-based active material on a substrate by chemically reacting a silane gas; thereafter, growing the metal silicon-based active material through crystal nucleation, wherein the step of growing the metal silicon-based active material through crystal nucleation includes generating crystal nuclei at a temperature of 800°C or higher for 1 hour to 24 hours.

That is, a metal silicon-based active material can be formed by the above-described method, and then the silicon-based active material can be manufactured through the step of pulverizing the metal silicon to form a silicon-based active material.

In an exemplary embodiment of the present application, there is provided the method for manufacturing a negative electrode active material in which the step of pulverizing the metal silicon to form a silicon-based active material includes performing milling for 12 hours or longer and 48 hours or less under a pulverization pressure condition of 3 bar or higher and 10 bar or less.

In an exemplary embodiment of the present application, the step of pulverizing the metal silicon to form a silicon-based active material may be performed under a pulverization pressure condition of 3 bar or higher and 10 bar or less, preferably 3.5 bar or higher and 9 bar or less, and more preferably 4 bar or higher and 8 bar or less.

In an exemplary embodiment of the present application, the step of pulverizing the metal silicon to form a silicon-based active material may include performing milling under the pulverization pressure condition for 12 hours or longer and 48 hours or less, specifically, 12 hours or longer and 30 hours or less, and more specifically, 12 hours or longer and 24 hours or less.

By changing the pressure, time, and process conditions as described above, a silicon-based active material satisfying the range of the Formula 1 above can be formed. That is, the difference in particle shape was controlled by adjusting the pulverization pressure and time in the process of pulverizing metal silicon by physical force to cause particle breakage, and accordingly the above conditions satisfying the range of the Formula 1 above were found.

In an exemplary embodiment of the present application, the milling step may include any process that can cause particle breakage through physical force, and specifically, may include a process such as jet mill, disk mill, or ball mill.

In an exemplary embodiment of the present application, there is provided a negative electrode for a lithium secondary battery including: a negative electrode current collector layer; and a negative electrode active material layer including the negative electrode composition according to the present application or a cured product thereof formed on one surface or both surfaces of the negative electrode current collector layer.

FIG. 1 is a view showing a stack structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface of the negative electrode current collector layer, but the negative electrode active material layer may be formed on both surfaces of the negative electrode current collector layer.

In an exemplary embodiment of the present application, the negative electrode for a lithium secondary battery may be formed by applying and drying a negative electrode slurry including the negative electrode composition to one surface or both surfaces of the negative electrode current collector layer.

In this case, the negative electrode slurry may include the negative electrode composition described above, and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition on the basis of 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

In an exemplary embodiment of the present application, the slurry solvent may be used without limitation as long as it can dissolve the negative electrode composition, and specifically, water or NMP may be used.

In an exemplary embodiment of the present application, the negative electrode current collector layer generally has a thickness of 1 $\mu$m to 100 $\mu$m. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, there is provided the negative electrode for a lithium secondary battery in which a thickness of the negative electrode current collector layer is 1 $\mu$m or greater and 100 $\mu$m or less and a thickness of the negative electrode active material layer is 20 $\mu$m or greater and 500 $\mu$m or less.

However, the thickness may be variously modified depending on a type and use of the negative electrode used, and is not limited thereto.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, conductive material and binder included in the negative electrode active material layer, and in particular, satisfies the range described above when the silicon-based active material according to the present application and the conductive material are included in the specific compositions and contents, so that the electrode has electrical conductivity and resistance within appropriate ranges.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 2 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stack structure with a separator 30 interposed therebetween.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

Mode for Invention

**<Preparation Examples>**

**<Preparation of First Metal Silicon-Based Active Material>**

After silane gasification of a lump of silicon, a metal silicon-based active material was formed on a substrate through deposition by a chemical reaction. In this case, the crystal nucleus growth time was 1 h to 30 h, and accordingly, the crystal grain size was 58.4 nm and the particle size (D50) was 5.94 $\mu$m and satisfied.

**<Preparation of Second Metal Silicon-Based Active Material>**

Unprocessed silicon (lump of silicon) was pulverized using physical force to prepare an unprocessed silicon-based active material.

**<Preparation of Silicon-Based Composite of Comparative Example 2>**

A silicon-based composite including a composite A including particles (A1) including Si with an average particle diameter dAV of the primary particles of 5 nm to 95 nm, particles (A2) composed of a material including graphite, and a carbonaceous material (A3) formed on the surface of the particles (A1) was prepared.

A metal silicon-based active material or a silicon-based composite of Comparative Example 2 was prepared in the same manner as in the above-described method, and then a silicon-based active material was prepared by changing the pulverization pressure and pulverization time in Table 1 below.

[Table 1]

| | Pulverization method | Pulverization pressure | Pulverization time | Flatness (Formula 1) | I(220)/I(111) x100 (Formula 2) |
|---|---|---|---|---|---|
| Comparative Example 1 | Jet mill | 2 bars | 12 h | 44.4 | 36.42 |
| Comparative Example 2 | Jet mill | 2 bars | 12 h | 42.3 | 31.03 |
| Example 1 | Jet mill | 4 bars | 12 h | 47.1 | 37.67 |
| Example 2 | Jet mill | 4 bars | 15 h | 48.1 | 38.42 |
| Example 3 | Jet mill | 4 bars | 24 h | 48 | 38.87 |
| Example 4 | Jet mill | 5 bars | 12 h | 50.5 | 39 |
| Example 5 | Jet mill | 5 bars | 15 h | 52.4 | 41.81 |
| Example 6 | Jet mill | 5 bars | 24 h | 53.3 | 40.15 |
| Example 7 | Jet mill | 6 bars | 12 h | 56.6 | 39.52 |
| Example 8 | Jet mill | 6 bars | 15 h | 61.8 | 39.54 |
| Example 9 | Jet mill | 6 bars | 24 h | 65.4 | 43.08 |
| Example 10 | Jet mill | 10 bars | 12 h | 74.9 | 43.32 |
| Example 11 | Jet mill | 10 bars | 15 h | 81.4 | 44.27 |
| Example 12 | Jet mill | 10 bars | 24 h | 87.7 | 45.00 |
| Example 13 | Jet mill | 10 bars | 48 h | 93.7 | 40.24 |

**<Preparation of Negative Electrode>**

A negative electrode active material including the silicon-based active material, a first conductive material, a second conductive material, and polyacrylamide as a binder were added to distilled water serving as a solvent for formation of a negative electrode slurry in a weight ratio of 80:9.6:0.4:10 to prepare a negative electrode slurry (solid concentration: 25 wt%).

Specifically, the first conductive material was plate-like graphite (specific surface area: $17 m^2/g$, average particle diameter (D50): 3.5 $\mu$m), and the second conductive material was SWCNT.

As a specific mixing method, after dispersing the first conductive material, the second conductive material, the binder and water at 2500 rpm for 30 minutes with a homo mixer, the silicon-based active material was added to the dispersion, which was then dispersed at 2500 rpm for 30 minutes to prepare a negative electrode slurry.

Copper current collector as negative current collector layer collector (thickness: The negative electrode slurry was coated on both surfaces of a copper current collector (thickness: 8 $\mu$m) serving as a negative electrode current collector layer with a loading amount of 85 mg/25 cm$^2$, which was then roll-pressed and dried in a vacuum oven at 130°C for 10 hours to form a negative electrode active material layer (thickness: 33 $\mu$m), whereby a negative electrode was prepared (thickness of negative electrode: 41 $\mu$m, porosity of negative electrode: 40.0%).

**<Preparation of Secondary Battery>**

A positive electrode slurry (solid concentration: 78 wt%) was prepared by adding $LiNi_{0.6}Co_{0.2}Mn_{0.2}O_2$ (average particle diameter (D50): 15 $\mu$m) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

Aluminum current collector as the positive electrode current collector (thickness: The positive electrode slurry was coated on both surfaces of an aluminum current collector (thickness: 12 $\mu$m) serving as a positive electrode current collector with a loading amount of 537 mg/25 cm$^2$, which was then roll-pressed and dried in a vacuum oven at 130°C for 10 hours to form a positive electrode active material layer (thickness: 65 $\mu$m), whereby a positive electrode was prepared (thickness of positive electrode: 77 $\mu$m, porosity: 26%).

A lithium secondary battery was manufactured by interposing a polyethylene separator between the positive electrode and the negative electrode of the Examples and the Comparative Examples and injecting an electrolyte.

The electrolyte was obtained by adding vinylene carbonate to an organic solvent, in which fluoroethylene carbonate (FEC) and diethyl carbonate (DMC) were mixed at a volume ratio of 10:90, in an amount of 3 wt% on the basis of a total weight of the electrolyte and adding $LiPF_6$ as a lithium salt to a concentration of 1M.

## Experimental Example 1: Monocell Life Evaluation

For the secondary batteries including the negative electrodes manufactured in the Examples and Comparative Examples, the life and capacity retention rate were evaluated using an electrochemical charging and discharging device. The in-situ cycle test was conducted on the secondary battery at 4.2-3.0 V 1 C/0.5 C, and during the test, 0.33 C/0.33 C charging/discharging (4.2-3.0 V) was performed every 50 cycles to measure the capacity retention rate, and results thereof are listed in Table 1.

life retention rate (%)={ (discharge capacity in the Nth cycle)/(discharge capacity in the first cycle)}×100

[Table 2]

|  | life retention rate (after 200 cycle) |
|---|---|
| Comparative Example 1 | 81 |
| Comparative Example 2 | 78.7 |
| Example 1 | 81.3 |
| Example 2 | 82.1 |
| Example 3 | 83.4 |
| Example 4 | 82.7 |
| Example 5 | 85.4 |
| Example 6 | 83 |
| Example 7 | 83 |
| Example 8 | 84 |
| Example 9 | 85.4 |
| Example 10 | 85.6 |
| Example 11 | 86 |
| Example 12 | 86.7 |
| Example 13 | 81.7 |

## Experimental Example 2: Evaluation of 2.5C Discharge Resistance Increase Rate @SOC50 (after 200 cycle)

In the test in Experimental Example 1, the capacity retention rate was measured by charging/discharging (4.2-3.0V) the battery at 0.33C/0.33C every 50 cycles, and then the resistance increase rate was compared and analyzed by discharging the battery with a pulse of 2.5C at SOC50 to measure the resistance.
For the evaluation of the resistance increase rate, data at 200 cycles was each calculated, and the results are shown in Table 3 below.

[Table 3]

|  | 2.5C Discharge resistance increase rate (1 C/0.5 C, after 200 cycle) |
|---|---|
| Comparative Example 1 | 40 |
| Comparative Example 2 | 51 |
| Example 1 | 38 |
| Example 2 | 37 |
| Example 3 | 36 |

(continued)

| | 2.5C Discharge resistance increase rate (1 C/0.5 C, after 200 cycle) |
|---|---|
| Example 4 | 37 |
| Example 5 | 32 |
| Example 6 | 34 |
| Example 7 | 34 |
| Example 8 | 33 |
| Example 9 | 32 |
| Example 10 | 31 |
| Example 11 | 27 |
| Example 12 | 23 |
| Example 13 | 39 |

As can be seen in Tables 2 and 3 above, in the case of Examples 1 to 9 according to the present application in which the flatness was adjusted, it could be confirmed that the life evaluation and resistance increase rate were superior to Comparative Example 1.

This means that the flatness satisfying the range of the Formula 1 above is controlled. That is, when a relatively large ratio of (111) crystal planes is formed as in the related art, lithium does not enter and exit uniformly during the intercalation and deintercalation reactions of lithium because the (111) crystal plane has lower lithium mobility compared to the (220) crystal plane. However, the silicon-based active material according to the present application includes a larger ratio of (220) crystal planes than the related art, so it could be confirmed that lithium enters and exits uniformly during the intercalation and deintercalation reactions of lithium, resulting in a reduction in breakage of silicon on the electrode surface to enhance the life characteristics of the electrode.

In the case of Comparative Example 2, it could be confirmed that the ranges of the Formulas 1 and 2 were not satisfied due to the increase in the ratio of (111) due to sintering of the silicon formed internally resulting from high-temperature heating (1500°C or higher) of Si/C for graphitization, and accordingly, the life performance was deteriorated and the resistance increase rate was evaluated as high.

For reference, it can be seen that the flatness (Formula 1) increases from Example 1 to Example 13. Generally, this corresponds to the sizes of the long and short axes becoming similar, and it can be seen that the life performance also tends to increase. However, in the case of Example 13, it was confirmed that the sizes of the long and short axes were most similar, but this required too strong force, so the target level of D50 was not satisfied, and the life was lower than those of the other Examples.

## Claims

1. A negative electrode active material comprising a silicon-based active material satisfying a flatness of Formula 1,

   wherein the silicon-based active material comprises one or more selected from the group consisting of SiOx (x=0) and SiOx (0<x<2), and comprises 70 parts by weight or more of SiOx (x=0) on the basis of 100 parts by weight of the silicon-based active material:

   $$[\text{Formula 1}]$$

   $$45 \leq (A/B) \times 100$$

   in the Formula 1,
   A refers to a length of a short axis of the silicon-based active material, and
   B refers to a length of a long axis of the silicon-based active material.

2. The negative electrode active material of claim 1, wherein the silicon-based active material includes (220) crystal planes and (111) crystal planes, and

wherein the silicon-based active material satisfies a range of Equation 2:

[Formula 2]

$$37 \leq (X/Y) \times 100$$

in the Formula 2,
Y refers to a ratio of (111) crystal planes in the silicon-based active material, and
X refers to a ratio of (220) crystal planes in the silicon-based active material.

3. The negative electrode active material of claim 1, wherein a D50 particle size of the silicon-based active material is 3 $\mu$m or greater and 10 $\mu$m or less.

4. The negative electrode active material of claim 1, wherein the silicon-based active material has a crystal grain size of 500 nm or less.

5. The negative electrode active material of claim 1, wherein the silicon-based active material satisfying the flatness of the Formula 1 is included in an amount of 80 parts by weight or more and 100 parts by weight or less on the basis of 100 parts by weight of the negative electrode active material.

6. A method for manufacturing a negative electrode active material, the method comprising:

preparing metal silicon; and
pulverizing the metal silicon to form a silicon-based active material,
wherein the silicon-based active material satisfies a flatness of Equation 1:

[Formula 1]

$$45 \leq (A/B) \times 100$$

in the Formula 1,
A refers to a length of a short axis of the silicon-based active material, and
B refers to a length of a long axis of the silicon-based active material.

7. The method of claim 6, wherein the preparing the metal silicon comprises a pulverization-type metal silicon forming step; or a silane deposition-type metal silicon forming step.

8. The method of claim 7, wherein the pulverization-type metal silicon forming step comprises pulverizing unprocessed silicon to form the metal silicon.

9. The method of claim 7, wherein the silane deposition-type metal silicon forming step comprises:

depositing a metal silicon-based active material on a substrate by chemically reacting a silane gas; and
obtaining the metal silicon-based active material deposited on the substrate.

10. The method of claim 6, wherein the pulverizing the metal silicon to form a silicon-based active material comprises performing milling for 12 hours or longer and 48 hours or less under a pulverization pressure condition of 3 bar or higher and 10 bar or less.

11. A negative electrode composition comprising:

the negative electrode active material of any one of claims 1 to 5;
a negative electrode conductive material; and
a negative electrode binder.

12. The negative electrode composition of claim 11,
wherein the negative electrode active material is included in an amount of 60 parts by weight or more on the basis of 100 parts by weight of the negative electrode composition.

13. A negative electrode for a lithium secondary battery comprising:

a negative electrode current collector layer; and
a negative electrode active material layer provided on one surface or both surfaces of the negative electrode current collector layer,
wherein the negative electrode active material layer comprises the negative electrode composition of claim 11 or a cured product thereof.

14. The negative electrode for a lithium secondary battery of claim 13, wherein a thickness of the negative electrode current collector layer is 1 $\mu$m or greater and 100 $\mu$m or less, and
wherein a thickness of the negative electrode active material layer is 20 $\mu$m or greater and 500 $\mu$m or less.

15. A lithium secondary battery comprising:

a positive electrode;
the negative electrode for a lithium secondary battery of claim 13;
a separator provided between the positive electrode and the negative electrode; and
an electrolyte.

[Figure 1]

[Figure 2]

[Figure 3]

[Figure 4]

[Figure 5]

(220) PLANE             (111) PLANE

[Figure 6]

## SILICON (220) PLANE

## SILICON (111) PLANE

## INTERNATIONAL SEARCH REPORT

| International application No. |
|---|
| **PCT/KR2023/095081** |

| | | |
|---|---|---|
| **A.** | **CLASSIFICATION OF SUBJECT MATTER** | |
| | **H01M 4/48**(2010.01)i; **C01B 33/113**(2006.01)i; **H01M 4/134**(2010.01)i; **H01M 10/0525**(2010.01)i; **H01M 4/02**(2006.01)i | |

According to International Patent Classification (IPC) or to both national classification and IPC

| | |
|---|---|
| **B.** | **FIELDS SEARCHED** |

Minimum documentation searched (classification system followed by classification symbols)

H01M 4/48(2010.01); H01M 10/052(2010.01); H01M 10/54(2006.01); H01M 4/131(2010.01); H01M 4/134(2010.01); H01M 4/36(2006.01); H01M 4/38(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 활물질(anode active material), 어스펙트비(aspect ratio), 분쇄 (grinding), 실리콘(silicon)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-2019-0125389 A (HITACHI CHEMICAL COMPANY, LTD.) 06 November 2019 (2019-11-06) See claims 1, 7 and 12-13; and paragraphs [0050]-[0051], [0078], [0085], [0092], [0097], [0101], [0162], [0165], [0168], [0178] and [0193]. | 1-15 |
| Y | JP 2021-535580 A (BTR (TIANJIN) NANO MATERIAL MANUFACTURE CO., LTD.) 16 December 2021 (2021-12-16) See claims 1 and 5. | 1-15 |
| Y | JP 2016-091762 A (CHUO DENKI KOGYO CO., LTD. et al.) 23 May 2016 (2016-05-23) See claims 1 and 13; and paragraphs [0025] and [0046]. | 2,14 |
| Y | KR 10-2016-0065028 A (SAMSUNG ELECTRONICS CO., LTD.) 08 June 2016 (2016-06-08) See paragraphs [0116]-[0118]. | 9 |
| A | KR 10-2022-0072983 A (HAN, Dong Hee) 03 June 2022 (2022-06-03) See entire document. | 1-15 |

| ☐ Further documents are listed in the continuation of Box C. | ☑ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 February 2024** | **29 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/095081**

| Patent document cited in search report | | | Publication date (day/month/year) | Patent family member(s) | | | Publication date (day/month/year) |
|---|---|---|---|---|---|---|---|
| KR | 10-2019-0125389 | A | 06 November 2019 | CA | 3058317 | A1 | 04 October 2018 |
| | | | | CN | 110462892 | A | 15 November 2019 |
| | | | | EP | 3605671 | A1 | 05 February 2020 |
| | | | | JP | 2020-024950 | A | 13 February 2020 |
| | | | | JP | 7147732 | B2 | 05 October 2022 |
| | | | | TW | 201841418 | A | 16 November 2018 |
| | | | | US | 2021-0075003 | A1 | 11 March 2021 |
| | | | | WO | 2018-179111 | A1 | 04 October 2018 |
| | | | | WO | 2018-179813 | A1 | 04 October 2018 |
| JP | 2021-535580 | A | 16 December 2021 | CN | 111799522 | A | 20 October 2020 |
| | | | | CN | 111799522 | B | 10 January 2023 |
| | | | | EP | 3832782 | A1 | 09 June 2021 |
| | | | | JP | 7220360 | B2 | 10 February 2023 |
| | | | | KR | 10-2021-0059763 | A | 25 May 2021 |
| | | | | US | 2022-0115718 | A1 | 14 April 2022 |
| | | | | WO | 2020-206884 | A1 | 15 October 2020 |
| JP | 2016-091762 | A | 23 May 2016 | None | | | |
| KR | 10-2016-0065028 | A | 08 June 2016 | CN | 105655568 | A | 08 June 2016 |
| | | | | EP | 3026736 | A1 | 01 June 2016 |
| | | | | EP | 3026736 | B1 | 07 February 2018 |
| | | | | US | 2016-0156031 | A1 | 02 June 2016 |
| KR | 10-2022-0072983 | A | 03 June 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1220220170486

- JP 2009080971 A